**Europäisches Patentamt**

**European Patent Office**

**Office européen des brevets**

(19)

(11) Veröffentlichungsnummer: **0 009 774**
**B1**

(12) **EUROPÄISCHE PATENTSCHRIFT**

(45) Veröffentlichungstag der Patentschrift:
15.07.81

(51) Int. Cl.³: **A 01 D 53/06**

(21) Anmeldenummer: **79103675.9**

(22) Anmeldetag: **27.09.79**

(54) **Grasauffangbehälter bei einem Rasenmäher.**

(30) Priorität: 28.09.78 FR 7828168
31.07.79 FR 7920427

(43) Veröffentlichungstag der Anmeldung:
16.04.80 Patentblatt 80/8

(45) Bekanntmachung des Hinweises auf die Patenterteilung:
15.07.81 Patentblatt 81/28

(84) Benannte Vertragsstaaten:
**AT BE CH DE IT NL**

(56) Entgegenhaltungen:
**CH-A-346 383**
**FR-A-1 509 683**
**FR-A-2 043 703**
**FR-A-2 237 564**
**FR-A-2 247 152**
**FR-A-2 282 780**
**US-A-2 862 346**
**US-A-2 983 095**

(73) Patentinhaber: **Outils Wolf, Société à responsabilité limitée, Rue de l'Industrie, F-67160 Wissembourg (FR)**

(72) Erfinder: **Der Erfinder hat auf seine Nennung verzichtet**

(74) Vertreter: **Nuss, Pierre, 10, rue Jacques Kablé, F-67000 Strasbourg (FR)**

ACTORUM AG.

Grasauffangbehälter bei einem Rasenmäher

Die Erfindung betrifft einen Grasauffangbehälter bei einem Rasenmäher, welcher Behälter sich zumindest aus zwei gelenkig miteinander verbundenen Teilen zusammensetzt.

Bisher war es üblich, bei Rasenmähern den Grasauffangbehälter beim Mähen in einem steifen Gestell zu befestigen. Zum Entleeren muss der gefüllte Behälter aus seinem steifen Gestell genommen oder an dem Rasenmäher geschwenkt werden. Indessen ist der Benutzer gezwungen, zum Entleeren des Behälters, wie z.B. eines Korbes, seine Arbeitsposition zu verlassen und sich neben den Rasenmäher zu begeben.

Das Herausnehmen oder das Verschwenken eines solchen im allgemeinen schweren Korbes ist zudem unbequem und verursacht einen beträchtlichen Zeitverlust.

Der Erfindung liegt die Aufgabe zugrunde, unter Vermeidung dieser Nachteile bei einem Rasenmäher den Grasauffangbehälter so auszugestalten, dass er leicht und rasch von aufgefangenem Gras entleert werden kann.

Diese Aufgabe wird dadurch gelöst, dass bei einem Grasauffangbehälter der eingangs beschriebenen Art der untere Teil des Behälters mit Achsen oder offenen Lagern ausgerüstet ist, die mit am Lenker oder an einem Träger des Rasenmähers angeordneten offenen Lagern bzw. Achsen zusammenarbeiten.

Gemäss einer Weiterbildung der Erfindung ist der obere Teil des Behälters auf der dem Rasenmäher entgegengesetzten Seite mit einem Manövriergriff versehen, an dem durch einfachen Zug von dem hinter dem Lenker gebliebenen Benutzer ein Verschwenken des Behälters in eine Stellung zum selbsttätigen Entleeren von aufgefangenem Gras möglich ist. Der Manövriergriff ist dabei zweckmässig so ausgebildet, dass er in der Arbeitsstellung des Behälters den oberen Teil an den unteren Teil verriegelt.

Der obere Teil des Behälters weist vorteilhaft auf der Seite, wo er an den Rasenmäher angehängt ist, einen Transportiergriff auf, mittels dem durch einfachen Zug ein Verschwenken des Behälters zum Benutzer hin möglich ist. Am oberen Teil des Behälters sind gemäss einer weiteren Ausbildung der Erfindung auf der der Gelenkachse gegenüberliegenden Seite Transportrollen angebracht, auf denen der verschwenkte und aus den Lagern ausgehobene Behälter zwecks Entleerung weggefahren werden kann. Dank der Erfindung sind die Handhabung und der Transport des Grasauffangbehälters bei einem Rasenmäher einfacher und schneller geworden, da der Benutzer zum Entleeren des Behälters hinter dem Lenker bleiben oder er den Behälter auf seinen Transportrollen wegfahren kann.

Ausführungsbeispiele der Erfindung werden nachfolgend anhand beigefügter Zeichnungen näher beschrieben. Es zeigen
Fig. 1 eine Seitenansicht eines in erfindungsgemässer Weise mit einem Grasauffangbehälter ausgerüsteten Rasenmähers;
Fig. 2 eine der Fig. 1 entsprechende Teilansicht mit dem Grasauffangbehälter in Entleerungsstellung;
Fig. 3 eine Ausführungsvariante der Fig. 1;
Fig. 4 eine der Fig. 3 entsprechende Ansicht mit ausgehobenem Grasauffangbehälter;
Fig. 5 eine den Fig. 3 und 4 entsprechende Ansicht mit in die Entleerungsstellung verschwenktem Grasauffangbehälter;
Fig. 6 eine Seitenansicht des Rasenmähers der Fig. 5, wobei der Grasauffangbehälter in die Transportstellung verschwenkt ist; und
Fig. 7 bis 9 verschiedene Ausführungsformen des Lagers der Schwenkachse.

Wie die Figuren zeigen, ist der in Form eines Korbes ausgebildete Grasauffangbehälter 1 zweiteilig ausgebildet, d.h. er setzt sich aus einem oberen Teil 7 und aus einem unteren Teil 8 zusammen, die an ihrem dem Rasenmäher 4 zugewandten Ende bei 6 gelenkig miteinander verbunden sind. Nach der Erfindung ist der untere Teil 8 des Korbes mit zwei Achsen 2 versehen, die je mit einem offenen Lager 10 am Lenker 3 des Rasenmähers zusammenarbeiten. An dem zur Gelenkachse 6 entgegengesetzten Ende ist der obere Teil 7 mit einem Manövriergriff 9 versehen.

Die Befestigung des Korbes 1 am Grasaustritt 5 des Rasenmähers 4 ist mittels einer bekannten Einrichtung verwirklicht, die am unteren Teil 8 dieses Korbes 1 vorgesehen ist.

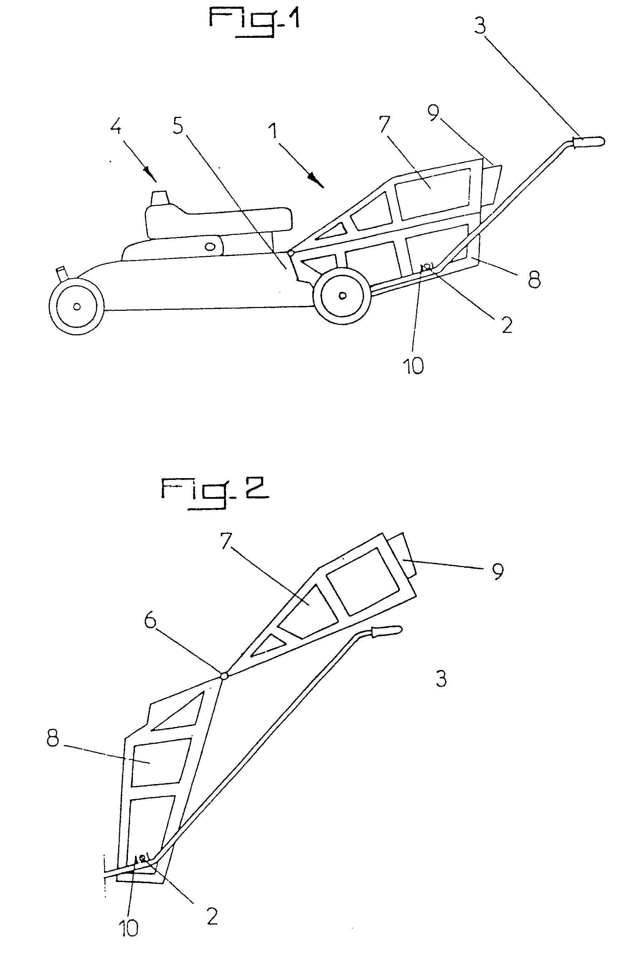

Aufgrund der Anordnung der Gelenkachse 6 zwischen den Teilen 7 und 8 sowie der Achsen 2 mit Lagern 10 ist es möglich, durch einfaches Ziehen am Griff 9 den Korb ohne ihn herauszunehmen um seine Achsen 2 zu verschwenken, wobei sich die Teile 7 und 8 öffnen und den Korb in die in Fig. 2 dargestellte Entleerungsstellung bringen, währenddessen der Benutzer in seiner Arbeitsstellung, d.h. hinter dem Lenker 3 bleibt.

Die Teile 7 und 8 können auch mittels eines Verriegelungshebels oder anderer Sperreinrichtungen so miteinander verriegelt werden, dass der Korb in üblicher Weise zur Entleerung z.B. in eine Schubkarre herausgenommen werden kann, indem der Korb aus seiner Halterung gelöst wird, ohne dass hierzu ein anderes Arbeitswerkzeug notwendig wäre.

An seinem dem Rasenmäher 4 zugewandten und mit dem Grasaustritt 5 verbundenen Ende ist der untere Teil 8 des Korbes 1 mit einer nicht dargestellten und an sich bekannten automatischen Schliessklappe versehen, die verhindert, dass beim Entleerungsmanöver des Korbes 1 an dieser Stelle Gras herausfällt, und die sich beim Wiederansetzen des Korbes an den Austritt 5 wieder wegbewegt.

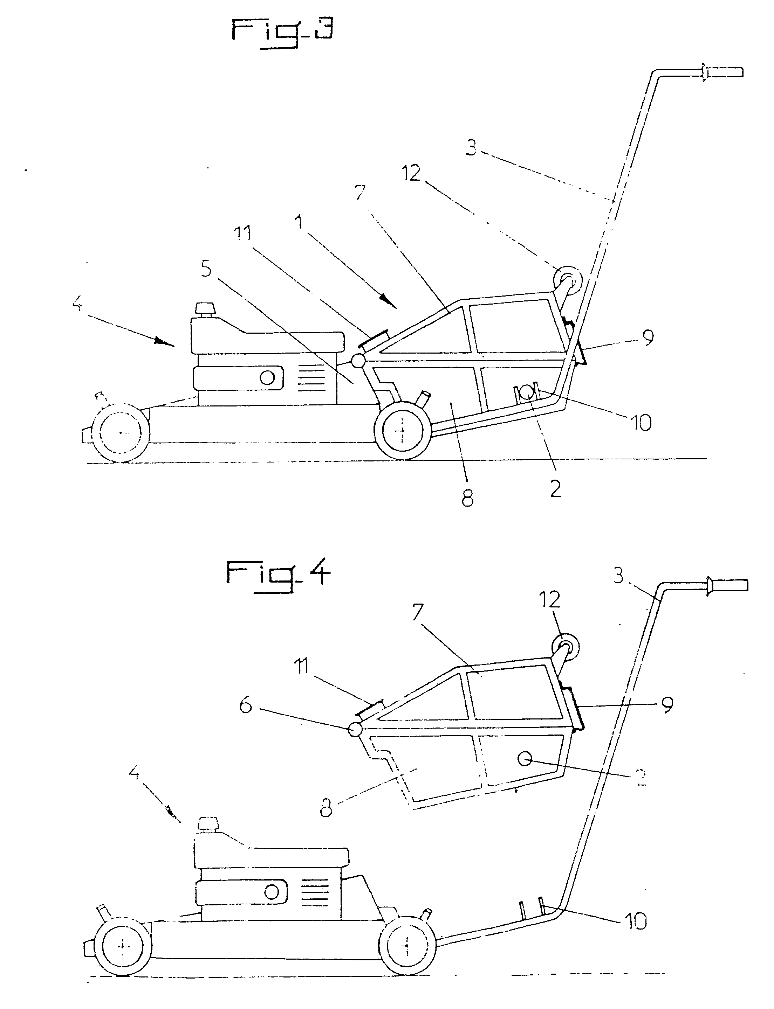

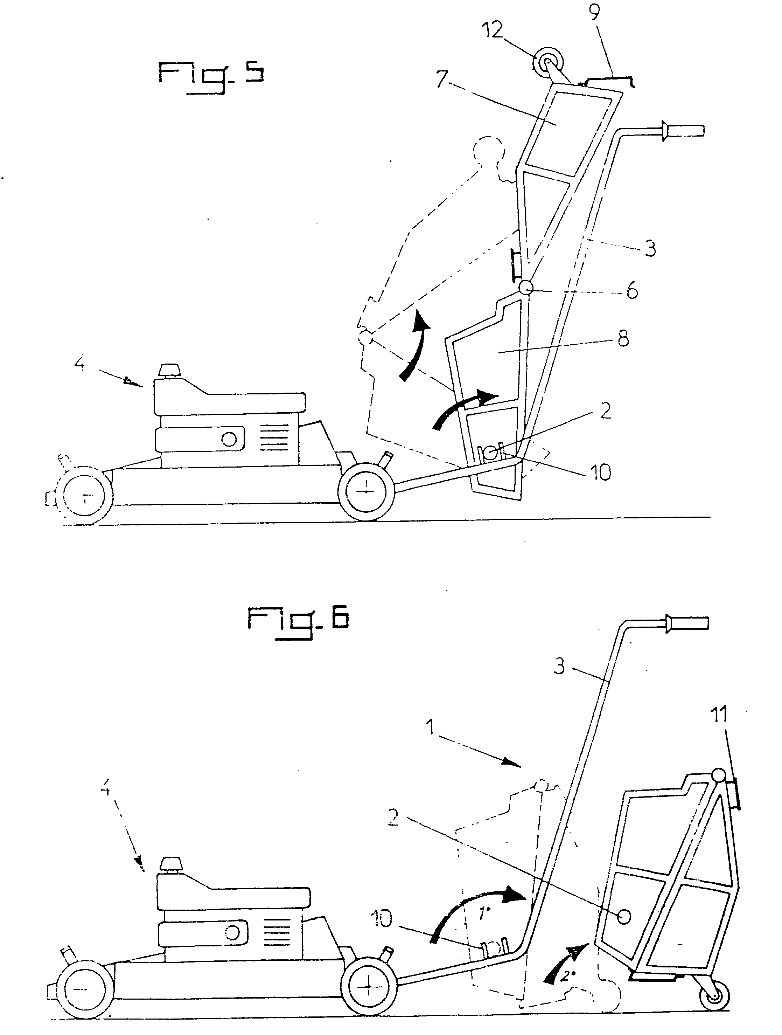

Gemäss einem weiteren Merkmal der Erfindung ist der obere Teil 7 des Behälters 1 auf der dem Rasenmäher zugewandten Seite mit einem Transportiergriff 11 versehen. Der Manövriergriff 9 ist elastisch mit einem Ende an dem oberen Teil 7 befestigt und er drückt mit seinem anderen Ende gegen das untere Teil 8, wodurch eine Verriegelung des Behälters 1 in der Arbeitsstellung erhalten wird (Fig. 3 bis 9). Das Zusammenwirken der Achsen 2 mit den offenen Lagern 10 des Lenkers 3 gestattet ein Verschwenken des Behälters 1 aus seiner in Fig. 1 dargestellten Stellung in eine der Stellungen von Fig. 5 und 6 oder dessen Herausheben aus den Lagern 10 (Fig. 4).

Über dem Griff 9 sind beidseitig des oberen Teils 7 Transportrollen 12 angebracht, die nach Herausheben des Behälters 1 aus den Lagern 2 mittels des Griffes 11 dessen leichtes Verfahren auf dem Boden ermöglichen. Mit seinem Vorderteil liegt der Behälter 1 in bekannter Weise an dem Grasabsaugkanal an.

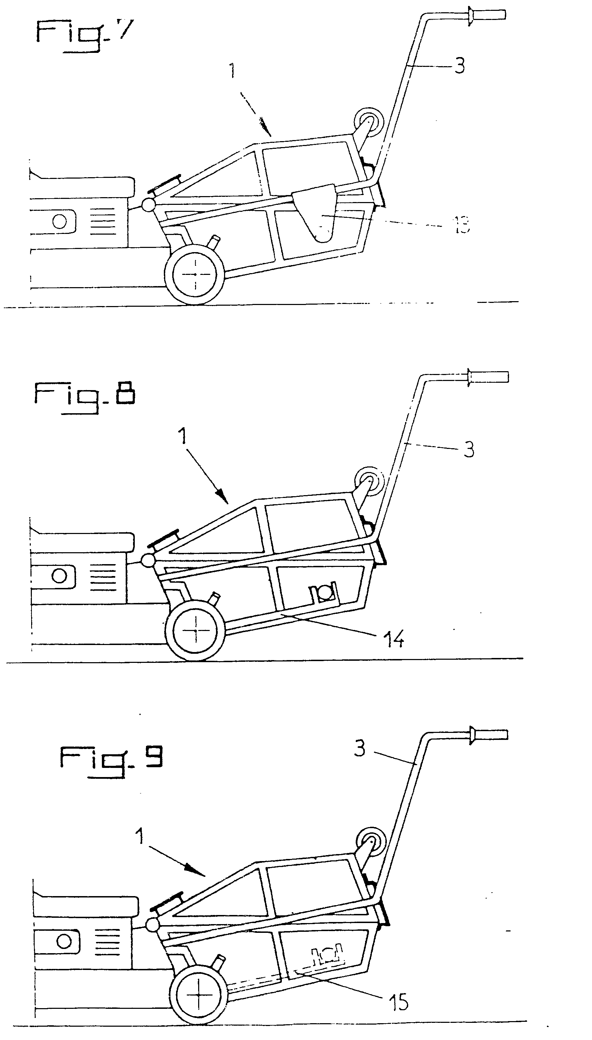

Wie die Fig. 3 bis 7 zeigen, sitzen die offenen Lager 10 je auf einem Arm des Lenkers 3, oder sie sind an einem oder mehreren Trägern befestigt, die unabhängig vom Lenker 3 an dem Rasenmäher anschliessen (Fig. 8 und 9). Die Fig. 7 zeigt eine Ausführungsform der Lager 10 in Form von zwei am Lenker 3 befestigten und unter diesen sich erstreckenden Lagerwiegen 13, in denen der Behälter 1 mit seinen Achsen 2 aufgenommen ist. Die Fig. 8 zeigt Lager entsprechend der Ausbildung der Fig. 3 bis 6, die jedoch von einem vom Lenker 3 unabhängigen Träger 14 abgestützt sind, der an das Fahrgestell des Rasenmähers 4 anschliesst. Die Fig. 9 zeigt eine Ausführungsvariante zur Fig. 8, bei welcher ein einziger Träger 15 vorgesehen ist, der sich ins Innere des Behälters 1 in dessen unterem Teil erstreckt. Die Träger 14 und 15 können fest oder verstellbar sein.

Zum Entleeren kann der Grasauffangbehälter entweder in üblicher Weise herausgehoben, oder ohne Herausnahme verschwenkt oder schliesslich auf seinen Rollen 12 zu einem bestimmten Platz verfahren werden.

Das Herausheben des Behälters 1 erfolgt durch Herausheben der Achsen 2 aus den Lagern 10 mittels der Griffe 9 und 11 (Fig. 4), wonach das Entleeren z.B. in eine Schubkarre erfolgen kann.

Zum raschen Entleeren des Behälters ohne dessen Herausnahme bleibt der Benutzer hinter dem Lenker 3 und er zieht an dem Griff 9 zum Entriegeln des oberen Teils 7, wonach er den unteren Teil 8 um seine Achsen 2 verschwenkt. Eine Öffnungsbewegung zwischen dem oberen Teil 7 und dem unteren Teil 8 ist dank der Gelenkachse 6 möglich. In Fig. 5 deuten die Pfeile den Schwenksinn der zwei Teile des Behälters 1 an, wobei das Schliessen und das Verriegeln in umgekehrter Weise erfolgen.

Zum Entleeren des Behälters 1 an einem bestimmten Platz wird dieser im verriegelten Zustand um seine Achsen 2 nach hinten geschwenkt, bis die Rollen 12 auf dem Boden zu stehen kommen (Fig. 6 Stellung 1°), wonach eine zusätzliche Schwenkbewegung um die Achse der Rollen 12 erfolgt (Fig. 6 Stellung 2°), was das Lösen der Achsen 2 aus den Lagern 10 zur Folge hat. Sodann kann der Behälter am Handgriff 11 weggefahren werden. Das Wiedereinsetzen des Behälters 1 erfolgt in umgekehrter Weise.

Um jeden zufälligen Kontakt mit dem Schneidmesser zu vermeiden, kann der Behälter 1 bei seiner Herausnahme oder seinem Verschwenken zwecks Entleerung eine den Kanal versperrende Sicherheitsklappe betätigen.

Der erfindungsgemässe Grasauffangbehälter ist insbesondere für Rasenmäher mit rückwärtigem Grasaustritt bestimmt. Durch seine Rollen 12 kann er ohne Mühe zu einem Entleerungsplatz gebracht werden.

Die Erfindung ist nicht auf die beschriebenen und in den Zeichnungen dargestellten Ausführungsformen beschränkt. Ohne den Gegenstand der Erfindung zu verlassen, können die Erfindungsmerkmale durch technisch äquivalente Merkmale ersetzt werden. So kann der Manövriergriff 9 in jeder gewünschten Weise an dem Behälter 1 angebracht sein.

**Patentansprüche**

1. Grasauffangbehälter bei einem Rasenmäher, welcher Behälter sich zumindest aus zwei gelenkig miteinander verbundenen Teilen zusammensetzt, dadurch gekennzeichnet, dass der untere Teil (8) des Behälters (1) mit Achsen (2) oder offenen Lagern ausgerüstet ist, die mit am Lenker (3) oder an einem Träger (14, 15) des Rasenmähers (4) angeordneten offenen Lagern (10, 13) bzw. Achsen zusammenarbeiten.

2. Behälter nach Anspruch 1, dadurch gekennzeichnet, dass der obere Teil (7) des Behälters (1) auf der dem Rasenmäher (4) entgegengesetzten Seite mit einem Manövriergriff (9) versehen ist, an dem durch einfachen Zug von dem hinter dem Lenker (3) gebliebenen Benutzer ein Verschwenken des Behälters in eine Stellung zum selbsttätigen Entleeren von aufgefangenem Gras möglich ist.

3. Behälter nach Anspruch 2, dadurch gekennzeichnet, dass der Manövriergriff (9) in der Arbeitsstellung des Behälters (1) den oberen Teil (7) an dem unteren Teil (8) verriegelt.

4. Behälter nach einem der Ansprüche 1 bis 3, dadurch gekennzeichnet, dass der obere Teil (7) des Behälters (1) auf der Seite, wo er an dem Rasenmäher (4) angehängt ist, einen Transportiergriff (11) aufweist, mittels dem durch einfachen Zug ein Verschwenken des Behälters zum Benutzer hin möglich ist.

5. Behälter nach Anspruch 2 oder 3 und Anspruch 4, dadurch gekennzeichnet, dass am oberen Teil 7 des Behälters 1 über dem Manövriergriff (9) Transportrollen (12) angebracht sind.

6. Behälter nach einem der Ansprüche 1 bis 5, dadurch gekennzeichnet, dass die offenen Lager durch zwei Lagerwiegen (13) gebildet sind, deren jede unter einem Arm des Lenkers (3) befestigt ist.

7. Behälter nach einem der Ansprüche 1 bis 5, dadurch gekennzeichnet, dass die offenen Lager von zwei Trägern (14) abgestützt sind, die beide unabhängig vom Lenker (3) am Fahrgestell des Rasenmähers anschliessen.

8. Behälter nach einem der Ansprüche 1 bis 5, dadurch gekennzeichnet, dass ein einziges offenes Lager auf einem an das Fahrgestell des Rasenmähers (4) anschliessenden Träger (15) abgestützt ist und sich ins Innere des unteren Teils (8) des Behälters (1) erstreckt.

9. Behälter nach Anspruch 7 oder 8, dadurch gekennzeichnet, dass die Träger (14, 15) der Lager fest oder verstellbar am Fahrgestell des Rasenmähers angeordnet sind.

## Revendications

1. Dispositif de réception de l'herbe coupée par une tondeuse à gazon, constitué par un récipient comportant au moins deux parties articulées entre elles, caractérisé en ce que la partie inférieure (8) est munie d'axes (2) ou de paliers ouverts coopérant respectivement avec des paliers ouverts (10, 13) ou avec des axes prévus sur le guidon (3) ou sur un support (14, 15) de la tondeuse (4).

2. Dispositif suivant la revendication 1, caractérisé en ce que la partie supérieure (7) du récipient (1) est munie, du côté opposé à la tondeuse (4), d'une poignée de manœuvre (9), qui permet, par une simple traction de l'utilisateur resté derrière le guidon (3), un basculement du récipient (1) dans une position de vidange automatique de l'herbe ramassée.

3. Dispositif suivant la revendication 2, caractérisé en ce que la poignée de manœuvre (9) verrouille la partie supérieure (7) sur la partie inférieure (8) en position de travail du récipient (1).

4. Dispositif suivant l'une quelconque des revendications 1 à 3, caractérisé en ce que la partie supérieure (7) du récipient (1) est munie, du côté de son accrochage sur la tondeuse (4), d'une poignée de transport (11) permettant le basculement du récipient (1) vers l'utilisateur par simple traction.

5. Dispositif suivant la revendication 2 ou 3 et la revendication 4, caractérisé en ce qu'à la partie supérieure (7) du récipient (1), au-dessus de la poignée de manœuvre et de verrouillage (9) sont prévues des roulettes de transport (12).

6. Dispositif suivant l'une quelconque des revendications 1 à 5, caractérisé en ce que les paliers ouverts sont constitués par deux paliers en berceau (13) accrochés chacun sous un bras du guidon (3).

7. Dispositif suivant l'une quelconque des revendications 1 à 5, caractérisé en ce que les palies ouverts sont constitués par deux parties solidaires chacune d'un support (14) indépendant du guidon (3), et solidaire du châssis de la tondeuse.

8. Dispositif suivant l'une quelconque des revendications 1 à 5, caractérisé en ce que le palier est unique et monté sur un support (15) solidaire du châssis de la tondeuse (4), et s'étendant à l'intérieur du récipient (1), dans sa partie inférieure (8).

9. Dispositif suivant l'une quelconque des revendications 7 ou 8, caractérisé en ce que les supports (14, 15) des palies sont montés sur le châssis de la tondeuse de manière fixe ou amovible.

## Claims

1. Grass collecting container for a lawnmower, said container comprising at least two parts connected in an articulated manner, characterized in that the lower part (8) of container (1) is equipped with spindles (2) or open bearings, which cooperate with open bearings (10, 13) or spindles arranged on the control lever (3) or on the support (14, 15) of lawnmower (4).

2. Container according to claim 1, characterized in that the upper part (7) of container (1) is provided on the side opposite to the lawnmower (4) with an operating grip (9), which brings about a tilting of the container into a position for the automatic emptying of the collected grass when pulled by the user from behind the control lever (3).

3. Container according to claim 2, characterized in that in the working position of container (1) operating grip (9) locks the upper part (7) to the lower part (8).

4. Container according to one of the claims 1 to 3, characterized in that the upper part (7) of container (1) has on the side where it is attached to lawnmower (4) a transporting grip (1) which, if pulled, tilts the container towards the user.

5. Container according to claims 2 or 3 and claim 4, characterized in that transporting rollers (12) are fitted to the upper part (7) of container (1) over operating grip (9).

6. Container according to one of the claims 1 to 5, characterized in that the open bearings are formed by two bearing cradles (13), each of which is fixed below an arm of control lever (3).

7. Container according to one of the claims 1 to 5, characterized in that the open bearings are supported by two supports (14), both of which are connected to the lawnmower chassis independently of the control lever (3).

8. Container according to one of the claims 1 to 5, characterized in that a single open bearing is supported on a support (15) connected to the chassis of lawnmower (4) and extends into the interior of the lower part (8) of container (1).

9. Container according to claims 7 or 8, characterized in that the supports (14, 15) of the bearings are arranged in fixed or adjustable manner on the lawnmower chassis.

# Fig-1

# Fig. 2

# Fig. 3

# Fig. 4

# Fig. 5

# Fig. 6

**Fig. 7**

1
3
13

**Fig. 8**

1
3
14

**Fig. 9**

3
1
15